(19) Europäisches Patentamt
European Patent Office
Office européen des brevets

(11) **EP 4 501 551 A1**

(12) **EUROPEAN PATENT APPLICATION**
published in accordance with Art. 153(4) EPC

(43) Date of publication:
05.02.2025 Bulletin 2025/06

(21) Application number: 23780041.2

(22) Date of filing: 23.03.2023

(51) International Patent Classification (IPC):
*B25J 9/10* (2006.01)   *B23Q 15/12* (2006.01)
*B25J 11/00* (2006.01)   *B25J 13/00* (2006.01)
*G05B 19/416* (2006.01)

(52) Cooperative Patent Classification (CPC):
B23Q 15/12; B25J 9/10; B25J 11/00; B25J 13/00;
G05B 19/416

(86) International application number:
PCT/JP2023/011499

(87) International publication number:
WO 2023/190030 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.03.2022 JP 2022053430

(71) Applicant: NTN Corporation
Osaka-shi Osaka 530-0005 (JP)

(72) Inventors:
• SHIMURA, Yuki
  Iwata-shi, Shizuoka 438-8510 (JP)
• KAGAMI, Masaki
  Iwata-shi, Shizuoka 438-8510 (JP)
• FURUHASHI, Kota
  Iwata-shi, Shizuoka 438-8510 (JP)

(74) Representative: Maikowski & Ninnemann
Patentanwälte Partnerschaft mbB
Postfach 15 09 20
10671 Berlin (DE)

(54) **CONTROL DEVICE FOR INDUSTRIAL EQUIPMENT**

(57)     Disclosed is a control device (Cu) operable to control an attitude control actuator (10) by means of which a distal end member (40) located on a link actuation device (7) can be moved. A parallel linkage mechanism is in place which can include a proximal end-side link hub (12), a distal end-side link hub (13), and three linkages (14) via which the distal end-side link hub (13) is coupled to the proximal end-side link hub (12) in such a manner that allows the attitude of the distal end-side link hub (13) to change relative to the proximal end-side link hub (12). The control device (Cu) includes a parameter switcher (65b) configured to switch control parameters to adjust the jerk of the attitude control actuator (10) or the distal end member (40) as a function of a load applied to the distal end member (40). The parameter switcher (65b) can be configured to switch more than one control parameter including at least one of the filter time constant of a moving average filter or a model following control gain.

EP 4 501 551 A1

## Fig. 1

**Description**

CROSS REFERENCE TO THE RELATED APPLICATION

This application is based on and claims Convention priority to a Japanese patent application No. 2022-053430 filed March 29, 2022, the entire disclosure of which is herein incorporated by reference as a part of this application.

BACKGROUND OF THE INVENTION

(Field of the Invention)

The present invention relates, for example, to a control device for industrial equipment, like medical devices and visual inspection devices, that requires a wide range of motion at high speeds and with precision.

(Description of Related Art)

Patent Document 1 proposes a work device that performs prescribed work using a parallel linkage mechanism that includes a base plate, a travelling plate, and a plurality of links via which they are coupled and which are actuated in cooperation with each other to move the travelling plate.

Patent Document 2 proposes a link actuation device that is capable of performing a wide range of motion at high speeds and with precision, despite being compact.

[Related Document]

[Patent Document]

[Patent Document 1] JP Laid-open Patent Publication No. 2000-094245
[Patent Document 2] U.S. Patent No. 5893296

SUMMARY OF THE INVENTION

The parallel linkage mechanism according to Patent Document 1 has a limited operating angle for each of the links. Thus, there is a need to make the lengths of the links longer to increase the range of motion that can be set for the travelling plate. The issue is that the device becomes bulky as a result of the increased lengths of the links and resulting enlargement of the mechanism as a whole. Other issues from the increased lengths of the links include a reduction in the rigidity of the mechanism as a whole, as well as a limitation on the weight of a tool that can be set on the travelling plate, that is, a limited load capacity of the travelling plate, as a result of a corresponding increase in the moment of inertia of an object (e.g., the tool) when set on the traveling plate.

Although capable of carrying out fine-grained attitude change at high speeds, the parallel linkage mechanism and the link actuation device disclosed in Patent Document 2 have the following issue: they constitute a speed increaser mechanism in which the attitude of a distal end-side link hub changes in a rate which is twice as fast as the rotational angles of attitude control actuators, and therefore present the issue of the weight (or load) that can be borne thereon being limited to a small value to permit high-speed motion, because objects with a large weight value, if set, would generate significant vibrations during a settling phase.

An object of the present invention is to provide a control device for industrial equipment, which can help a wide range of weights be borne by the latter and can, therefore, provide an enhanced versatility to the latter.

To assist in the understanding of the present invention, reference symbols from embodiments are referred to, as appropriate, in the following description of the present invention.

The present invention provides a control device Cu for industrial equipment with a distal end member 40 provided movably by means of an actuator 10. The control device Cu is operable to control the actuator 10 and includes a parameter switcher 65b configured to switch control parameters to adjust the jerk of the actuator 10 or the distal end member 40 as a function of a load applied to the distal end member 40.

The term "jerk" refers to a rate of change in acceleration per unit time and is also called a "jolt."

According to this configuration, the jerk can be decreased, for example, in response to an increase of a load such as the weight that is borne, to suppress the vibrations of the distal end member 40 of the industrial equipment that may appear during a driving phase and during a settling phase. In particular, adjustments to the jerk are carried out with little or no reduction of a commanded velocity. Accordingly, a wide range of weights can be borne by a single machine which concurrently implements a high-speed operation. In this way, it is possible to enhance the versatility of the industrial equipment.

The industrial equipment may include a link actuation device 7. The link actuation device 7 includes a proximal end-side link hub 12, a distal end-side link hub 13, and at least three linkages 14 via which the distal end-side link hub 13 is coupled to the proximal end-side link hub 12 in such a manner that allows the attitude of the distal end-side link hub 13 to change relative to the proximal end-side link hub 12. Each of the linkages 14 includes a proximal end-side end link member 15 and a distal end-side end link member 16 each having one of opposite ends that is pivotably coupled to a respective one of the proximal end-side link hub 12 and the distal end-side link hub 13 and an intermediate link member 17 having opposite ends each pivotably coupled to a respective one of: the other of the opposite ends of the proximal end-side end link member 15; and the other of the opposite ends of the distal end-side end link member 16. Two or more of the at least three linkages 14 are provided with the actuator 10 for attitude control to set the distal end-side link hub 13 into a desired attitude relative to the proximal end-side link hub 12.

According to this configuration, the link actuation device 7 obviates the need to install a servo motor to a movable component of the device 7 by adopting a parallel linkage mechanism and, thanks to the resulting low weight of the movable component, is good at performing intricate movements at higher speeds by adding more jerks. A jerk is a significant factor for the speed of such a link actuation device 7 and, accordingly, a takt time. Increase of the weight borne leads to more occurrences of vibrations due to a greater weight on the movable component. The parameter switcher 65b configured to switch control parameters to adjust a jerk is even more advantageous for these reasons.

The parameter switcher 65b may be configured to switch more than one control parameter including at least one of the filter time constant of a moving average filter or a model following control gain. Here, by either raising the filter time constant of the moving average filter or lowering the model following control gain, the jerk can be decreased to suppress impacts which may result from changes in acceleration. Thus, the parameter switcher 65b causes a change in the control parameters so that either the filter time constant of the moving average filter is raised or the model following control gain is lowered when the weight (or load) borne is high. In this way, vibrations during a settling phase and torque of the actuator 10 can be reduced and, therefore, the vibrations of the distal end member 40 that may appear during a driving phase and during a settling phase can be suppressed without compromising the speed of the industrial equipment.

Note that conventional control does not take into account continuous changes in acceleration which may be introduced by the moving average filter. That is, the continuous changes in acceleration could be seen as influences triggered by disturbances and automatically corrected in an automatic control loop, thereby producing unintended results. In this situation, by modifying the filter time constant of the moving average filter together with the model following control gain, it is possible to bring position control, speed control, and current control closer to ideal, linear-like control which approximates conventionally issued commands, as a function of the magnitude of the load. In this way, the occurrences of vibrations and impacts can be suppressed while achieving a shorter settling time with speeds kept at the maximum level.

The parameter switcher 65b may be configured to switch more than one control parameter to adjust the acceleration of the actuator 10 or the distal end member 40. Here, by adjusting not only the jerk but also the acceleration as a function of the weight borne, a wider adjustment range for the control parameters can be made available, which thereby facilitates suppression of vibrations that may appear during a driving phase and during a settling phase as well as reduction of torque of the actuator 10, without compromising the speed of the industrial equipment.

The more than one control parameter to adjust the acceleration may include at least one of an acceleration time, a deceleration time, or a commanded velocity. The inclusion of at least one of an acceleration time, a deceleration time, or a commanded velocity in control parameters related to an acceleration can make it easy for adjustments to be made to the acceleration.

The parameter switcher 65b may be configured to decrease the jerk and increase the acceleration as the load increases. A jerk has more effect than an acceleration on the generation of impacts on the distal end member 40 of the industrial equipment. Hence, this type of adjustments to the control parameters may enable the industrial equipment to be operated at even higher speeds.

The industrial equipment may include an operating device Ou configured to enable at least the displacement pattern of the distal end member 40 and the control parameters to be set. The operating device Ou includes an operating element 61 via which to select and change load conditions. In this case, the operating element 61 of the operating device Ou can be used to set the displacement pattern and control parameters, among others, for the control device Cu, and can also be used to conveniently switch the control parameters between values corresponding to different load conditions, as a function of a selected load condition.

Any combinations of at least two features disclosed in the claims and/or the specification and/or the drawings should also be construed as encompassed by the present invention. Especially, any combinations of two or more of the claims should also be construed as encompassed by the present invention.

**EP 4 501 551 A1**

BRIEF DESCRIPTION OF THE DRAWINGS

The present invention will be more clearly understood from the following description of preferred embodiments that is made with reference to the accompanying drawings. However, the embodiments and the drawings are given merely for the purpose of illustration and explanation, and should not be used to delimit the scope of the present invention, which scope is to be delimited by the appended claims. In the accompanying drawings, alike numerals indicate alike or corresponding parts throughout the different figures, and:

Fig. 1 includes a block diagram of a control device for a link actuation device and a perspective view of the link actuation device controlled by the control device, in accordance with a first embodiment of the present invention;
Fig. 2 is a front elevational view of an operating device for the control device;
Fig. 3 is a perspective view of the link actuation device;
Fig. 4 is a front elevational view of a simplified model obtained by omitting two linkages from the link actuation device;
Fig. 5A is an enlarged view of the portion enclosed by a dotted and dashed line shown in Fig. 5B;
Fig. 5B is a partial cross-sectional view taken along the line VA-VA shown in Fig. 4;
Fig. 6 is a diagram depicting one of linkages of the link actuation device using straight lines;
Fig. 7 is a diagram illustrating the maximum bending angle, among others, for the link actuation device;
Fig. 8 shows the relationship between load conditions and control parameters for the link actuation device;
Fig. 9A is a diagram that illustrates reference waveforms for speed and others when no filter time constant is set;
Fig. 9B is a diagram that illustrates waveforms for speed and others when a filter time constant is set in the control device;
Fig. 10A is a block diagram of a control system for when no filter time constant is set;
Fig. 10B is a block diagram of a control system for when a filter time constant is set in the control device;
Fig. 11 is a front elevational view of a link actuation device and others in accordance with a second embodiment of the present invention;
Fig. 12 is a perspective view of a link actuation device and others in accordance with a third embodiment of the present invention;
Fig. 13A is a front elevational view of industrial equipment and others in accordance with a fourth embodiment of the present invention; and
Fig. 13B is a front elevational view of industrial equipment and others in accordance with a fifth embodiment of the present invention.

DESCRIPTION OF EMBODIMENTS

[First Embodiment]

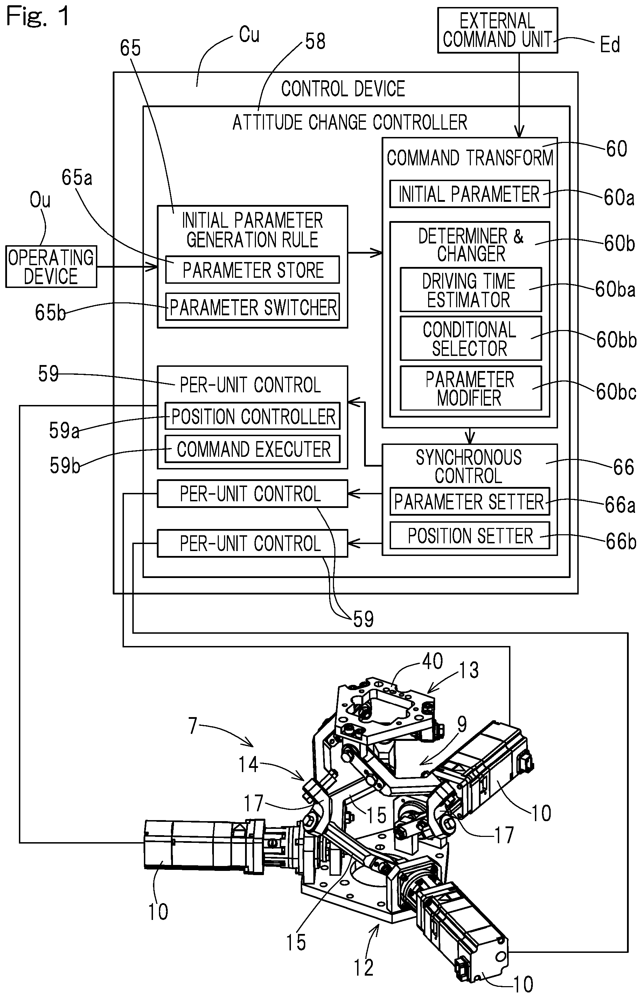

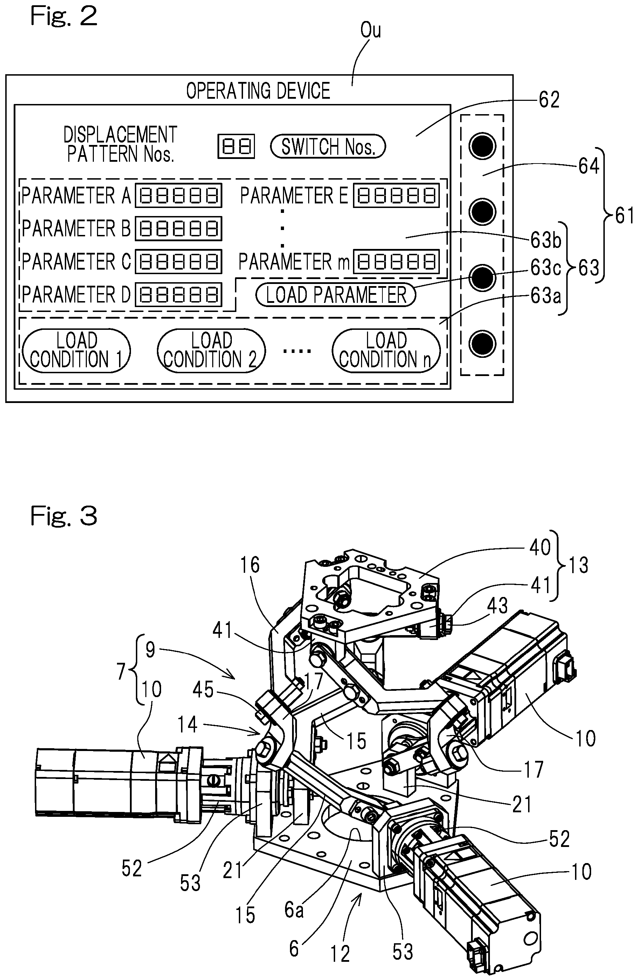

A control device for industrial equipment according to an embodiment of the present invention will be described in connection with Figs. 1 to 10B.
Referring to Fig. 1, the description of the instant embodiment starts with discussions on a link actuation device 7 which is part of industrial equipment to be controlled and, then, proceeds to discussions on a control device Cu for the link actuation device 7 and an operating device Ou shown in Fig. 2. The following description also includes discussions on how to control the industrial equipment.

<Link actuation device>

As illustrated in Fig. 3, the linkage-operate device 7 includes a parallel linkage mechanism 9, an attitude control actuator (or actuators) 10 that actuates the parallel linkage mechanism 9, and the operating device Ou (Fig. 2) which will be further discussed later.

<Parallel Linkage Mechanism>

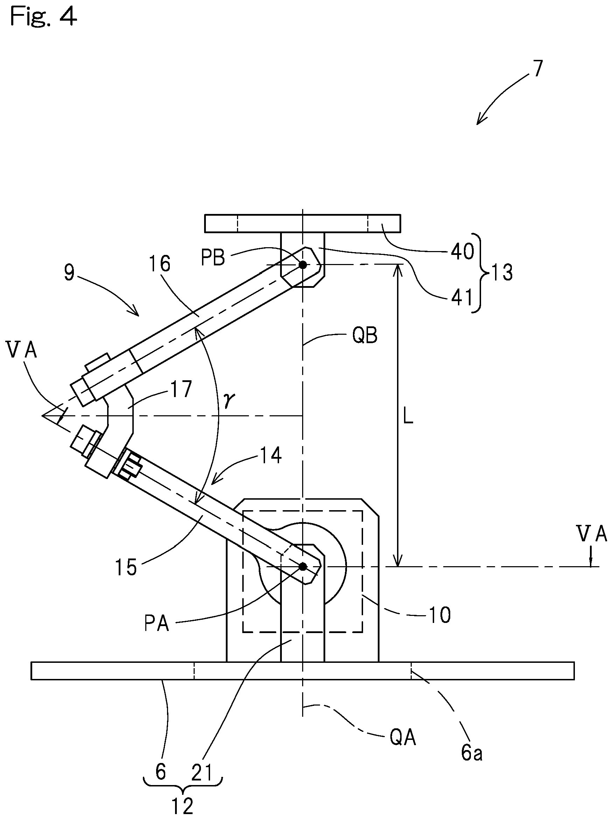

The parallel linkage mechanism 9 includes a proximal end-side link hub 12, a distal end-side link hub 13, and three linkages 14 via which the distal end-side link hub 13 is coupled to the proximal end-side link hub 12 in such a manner that allows the attitude of the distal end-side link hub 13 to change relative to the proximal end-side link hub 12. More than three linkages 14 may be provided. In Fig 4, only one linkage 14 is shown with the remaining two linkages being made invisible.
Each of the linkages 14 represents a four-chain linkage with four revolute pairs and includes a proximal end-side end link member 15, a distal end-side end link member 16, and an intermediate link member 17.

As illustrated in Fig. 3, the proximal end-side end link member 15 and the distal end-side end link member 16 are L-shaped and have one of opposite ends that is pivotably coupled to a respective one of the proximal end-side link hub 12 and the distal end-side link hub 13. The intermediate link member 17 has opposite ends each pivotably coupled to a respective one of: the other of the opposite ends of the proximal end-side end link member 15; and the other of the opposite ends of the distal end-side end link member 16.

Referring to Fig. 4, the parallel linkage mechanism 9 is structured with a combination of two spherical linkage mechanisms. The central axis of each of revolute pairs between the proximal end-side link hub 12 and the proximal end-side end link members 15 intersects at the center PA of a proximal end-side spherical linkage with the central axis of each of revolute pairs between the proximal end-side end link members 15 and the intermediate link members 17. Similarly, the central axis of each of revolute pairs between the distal end-side link hub 13 and the distal end-side end link members 16 intersects at the center PB of a distal end-side spherical linkage with the central axis of each of revolute pairs between the distal end-side end link members 16 and the intermediate link members 17.

Also, the distances between the center PA of the proximal end-side spherical linkage and the centers of the revolute pairs between the proximal end-side link hub 12 and the proximal end-side end link members 15 are identical. The distances between the center PA of the proximal end-side spherical linkage and the centers of the revolute pairs between the proximal end-side end link members 15 and the intermediate link members 17 are identical. Similarly, the distances between the center PB of the distal end-side spherical linkage and the centers of the revolute pairs between the distal end-side link hub 13 and the distal end-side end link members 16 are identical. The distances between the center PB of the distal end-side spherical linkage and the centers of the revolute pairs between the distal end-side end link members 16 and the intermediate link members 17 are identical. The central axis of the revolute pair between a proximal end-side end link member 15 and an intermediate link member 17 and the central axis of the revolute pair between that intermediate link member 17 and a corresponding distal end-side end link member 16 may be at an intersecting angle $\gamma$ therebetween or may be parallel to each other.

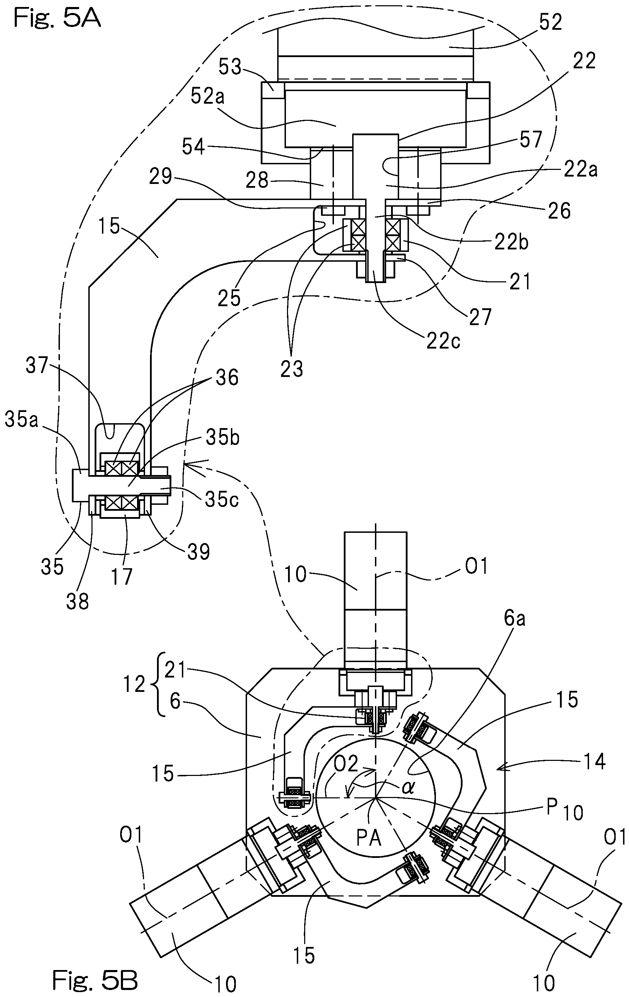

The relationship between the spherical linkage center PA and the central axes O1 of the revolute pairs between the proximal end-side link hub 12 and the proximal end-side end link members 15 is shown in Fig. 5B. Although not shown, the distal end-side link hub 13 (Fig. 4) and the distal end-side end link members 16 (Fig. 4) have geometries and positional relationships that are analogous to those shown in Fig. 5B. As can be seen from Fig. 5B, the central axis O1 of each of the revolute pairs between the proximal end-side link hub 12 and the proximal end-side end link members 15 forms an angle $\alpha$ equal to 90 degrees to the central axis O2 of a respective one of the revolute pairs between the proximal end-side end link members 15 and the intermediate link members 17 (Fig. 5A). However, the angle $\alpha$ may be less than or more than 90 degrees.

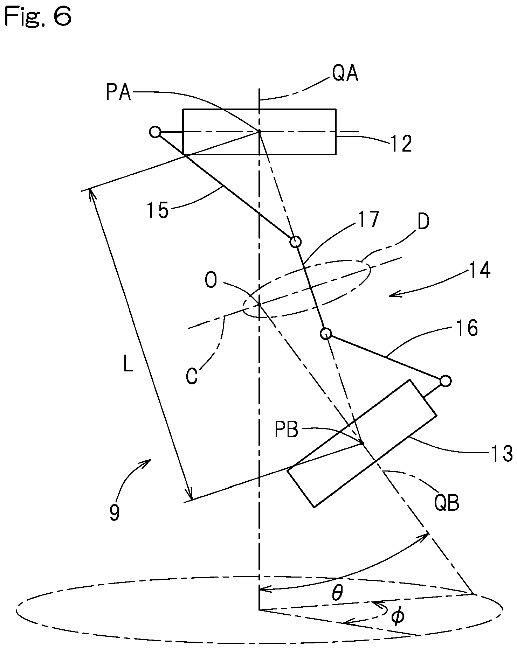

The three linkages 14 have a shape with geometrical homogeneity As can be seen from Fig. 6, a shape with geometrical homogeneity refers to a shape of a linkage in which symmetry between the proximal end side and the distal end side of the linkage with respect to the center of an intermediate link member 17 is maintained at all positions, in a geometrical model in which all of the link members 15, 16, and 17 are represented as straight lines, that is, a model which is described with revolute pairs and straight lines connecting them. Fig. 6 is a diagram depicting one of the linkages 14 using straight lines. The parallel linkage mechanism 9 in the instant embodiment is rotationally symmetrical in which the proximal end-side link hub 12 and one of the proximal end-side end link members 15 are positionally configured to be rotationally symmetrical to the distal end-side link hub 13 and a respective one of the distal end-side end link members 16 with respect to the mid-line C of a corresponding one of the intermediate link members 17. The centers of all of the intermediate link members 17 lie on a common circle D of a certain trajectory.

The proximal end-side link hub 12, the distal end-side link hub 13, and the three linkages 14 constitute a mechanism that provides two degrees of freedom of rotation of the distal end-side link hub 13 relative to the proximal end-side link hub 12 about two orthogonal axes. In other words, the mechanism allows the attitude of the distal end-side link hub 13 to change relative to the proximal end-side link hub 12 with two degrees of freedom of rotation. Despite being compact, such a mechanism having two degrees of freedom allows the distal end-side link hub 13 to make a wide range of motion relative to the proximal end-side link hub 12.

By way of example, assuming the central axes QA and QB of the proximal and distal end-side link hubs 12 and 13 to be straight lines passing through the centers PA and PB of the proximal and distal end-side spherical linkages, respectively, and forming a right angle to the central axis O1 (Fig. 5B) of each of the revolute pairs between the proximal and distal end-side link hubs 12 and 13 and the proximal and distal end-side end link members 15 and 16, respectively, then, the bending angle $\theta$ between the central axis QA of the proximal end-side link hub 12 and the central axis QB of the distal end-side link hub 13 can range up to the maximum value of about $\pm$ 90 degrees which is the maximum bending angle $\theta_{max}$. Further, the swivel angle $\varphi$ of the distal end-side link hub 13 relative to the proximal end-side link hub 12 can be set to a value within the range of 0 to 360 degrees. The bending angle $\theta$ refers to an angle of inclination of the central axis QB of the distal end-side link hub 13 relative to the central axis QA of the proximal end-side link hub 12 as measured in the vertical. Meanwhile, the swivel angle $\varphi$ refers to an angle of inclination of the central axis QB of the distal end-side link hub 13 relative to the central axis QA of the proximal end-side link hub 12 as measured in the horizontal. Note that the maximum

bending angle $\theta_{max}$ may be more than 90 degrees.

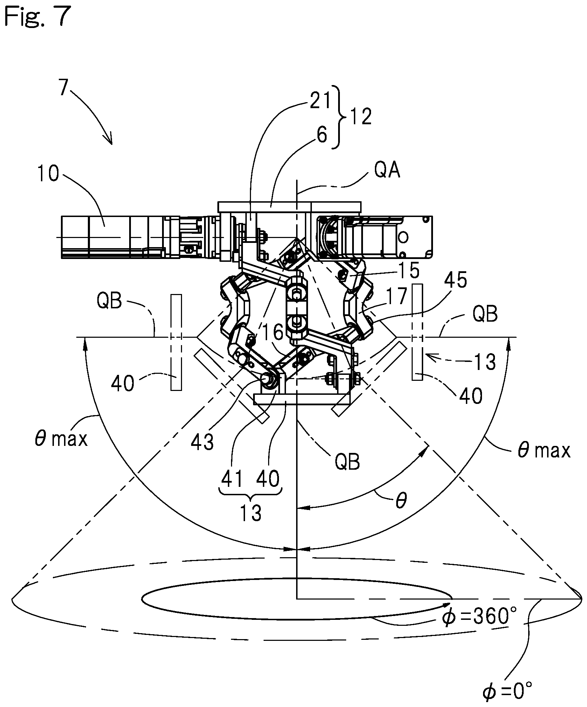

The distal end-side link hub 13 changes its attitude relative to the proximal end-side link hub 12 by rotating about a point O at which the central axis QA of the proximal end-side link hub 12 intersects with the central axis QB of the distal end-side link hub 13. The solid line in Fig. 7 indicates a position in which the central axis QA of the proximal end-side link hub 12 and the central axis QB of the distal end-side link hub 13 are colinear with each other. The two-dotted and dashed lines in Fig. 7 indicate positions in which the central axis QB of the distal end-side link hub 13 has reached a certain operating angle (or bending angle) to the central axis QA of the proximal end-side link hub 12. As illustrated in Fig 6, the distance L between the centers PA and PB of the proximal and distal end-side spherical linkages does not change even as the attitude of the distal end-side link hub 13 changes relative to the proximal end-side link hub 12.

Referring to Figs. 5B and 6, the proximal end-side link hub 12 and the proximal end-side end link members 15 move identically to the distal end-side link hub 13 and the distal end-side end link members 16 in the parallel linkage mechanism 9 based on their geometrical symmetry when all of the following conditions are met. Namely, the parallel linkage mechanism 9 functions like a constant velocity universal joint in which the proximal end side and the distal end side rotate through the same angle at the same speed when it transmits rotation from the proximal end side to the distal end side.

1st condition: in each of the linkages 14, the angle of the central axis O1 of the revolute pair between the proximal end-side link hub 12 and a proximal end-side end link member 15 and its distance from the center PA of the proximal end-side spherical linkage are identical to the angle of the central axis O1 of the revolute pair between the distal end-side link hub 13 and a distal end-side end link member 16 and its distance from the center PB of the distal end-side spherical linkage;

2nd condition: for all of the linkages 14, the central axes O1 of the revolute pairs between the proximal end-side link hub 12 and the proximal end-side end link members 15 intersect with the central axes O2 of the revolute pairs between the proximal end-side end link members 15 and the intermediate link members 17 at the center PA of the proximal end-side spherical linkage on the proximal end side, while the central axes O1 of the revolute pairs between the distal end-side link hub 13 and the distal end-side end link members 16 intersect with the central axes O2 of the revolute pairs between the distal end-side end link members 16 and the intermediate link members 17 at the center PB of the distal end-side spherical linkage on the distal end side;

3rd condition: the proximal end-side end link members 15 are geometrically identical in shape to the distal end-side end link members 16;

4th condition: the proximal end-side part and the distal end-side part of an intermediate link member 17 are geometrically identical in shape; and

5th condition: the angular-positional relationship between an intermediate link member 17 and a proximal end-side end link member 15 on the proximal end side is identical to the angular-positional relationship between that intermediate link member 17 and a distal end-side end link member 16 on the distal end side with respect to a plane of symmetry of that intermediate link member 17.

As illustrated in Fig. 3, the proximal end-side link hub 12 includes a planar proximal end member 6 and three rotary shaft coupling members 21 provided as a one-piece construction with the proximal end member 6. As illustrated in Fig. 5B, the proximal end member 6 includes a circular through hole 6a at the center thereof, and the three rotary shaft coupling members 21 are disposed at regular intervals circumferentially around the through hole 6a. The center of the through hole 6a lies on the central axis QA of the proximal end-side link hub 12 which is shown in Fig. 4. At each of the rotary shaft coupling members 21, a rotary shaft 22 shown in Fig. 5A is rotatably coupled such that the axis of the rotary shaft 22 intersects with the central axis QA of the proximal end-side link hub 12. To the rotary shaft 22, one end of a respective one of the proximal end-side end link members 15 is coupled.

The rotary shaft 22 has a larger diameter part 22a, a smaller diameter part 22b, and a male-threaded part 22c, successively along its axial dimension, and is supported rotatably at the smaller diameter part 22b on a respective one of the rotary shaft coupling members 21 through two bearings 23. The bearings 23 are ball bearings such as, for example, deep groove ball bearings and angular contact ball bearings. The bearings 23 are set in place and secured such that the outer circumferential surfaces of their outer rings are fitted into an inner diameter groove located in the respective one of the rotary shaft coupling members 21. The same kind of bearings are also set in place in a similar fashion for the rest of the revolute pairs.

The rotary shaft 22 is coaxially disposed, at the larger diameter part 22, on an output shaft 52a of a speed reducer mechanism 52 which will be further discussed later. To the rotary shaft 22, the one end of the respective one of the proximal end-side end link members 15 is coupled so as to rotate as a unit with the rotary shaft 22. The respective one of the proximal end-side end link members 15 is formed with a cutout 25 at the one end thereof, such that the lateral sides of the cutout 25 form a pair of outer and inner rotary shaft supporting parts 26, 27. The pair of the rotary shaft supporting parts 26, 27 have respective through holes formed therein. The respective one of the rotary shaft coupling members 21 is disposed inside the cutout 25, and the smaller diameter part 22b of the rotary shaft 22 is inserted through the through holes and the inner circumferential surfaces of the inner rings of the bearings 23. The male-threaded part 22c of the rotary shaft 22 protrudes inwardly from the inner rotary shaft supporting part 27.

A spacer 28 is fitted onto the outer periphery of the larger diameter part 22a of the rotary shaft 22, and bolts 29 are used to fix the respective one of the proximal end-side end link members 15 to the outer shaft 52a of the speed reducer mechanism 52 across the spacer 28. Also, a nut is threaded onto the male-threaded part 22c of the rotary shaft 22. Spacers are interposed between the end faces of the inner rings of the bearings 23 and the pair of rotary shaft supporting parts 26, 27 so that a preload is imparted to the bearings 23 upon tightening of the nut.

The respective one of the proximal end-side end link members 15 has, at the other end thereof, a rotary shaft 35 coupled thereto. The rotary shaft 35, in turn, is rotatably coupled to one end of a respective one of the intermediate link members 17. Analogously to the rotary shaft 22 at the proximal end-side link hub 12 (Fig. 5B), the rotary shaft 35 has a larger diameter part 35a, a smaller diameter part 35b, and a male-threaded part 35c, and is supported rotatably at the smaller diameter part 35b on the one end of the respective one of the intermediate link members 17 through two bearings 36. The respective one of the proximal end-side end link members 15 is formed with a cutout 37 at the other end thereof, such that the lateral sides of the cutout 37 form a pair of outer and inner rotary shaft supporting parts 38, 39. The rotary shaft supporting parts 38, 39 have respective through holes formed therein. The male-threaded part 35c protrudes inwardly from the inner rotary shaft supporting part 39.

The one end of the respective one of the intermediate link members 17 is disposed inside the cutout 37, and the smaller diameter part 35b is inserted through the through holes and the inner circumferential surfaces of the inner rings of the bearings 36. Also, a nut is threaded onto the male-threaded part 35c. Spacers are interposed between the end faces of the inner rings of the bearings 36 and the pair of rotary shaft supporting parts 38, 39 so that a preload is imparted to the bearings 36 upon tightening of the nut.

As illustrated in Fig. 3, the distal end-side link hub 13 includes a planar distal end member 40 and three rotary shaft coupling members 41 located at regular intervals circumferentially on the underside of the distal end member 40. The center of the circumference along which all of the rotary shaft coupling members 41 are positioned lies on the central axis QB (Fig. 4) of the distal end-side link hub 13. At each of the rotary shaft coupling members 41, a rotary shaft 43 is rotatably coupled such that the axis of the rotary shaft 43 intersects with the central axis QB of the distal end-side link hub 13 shown in Fig. 7. To the rotary shaft 43, one end of a respective one of the distal end-side end link members 16 is coupled, as shown in Fig. 3. The respective one of the distal end-side end link members 16 has, at the other end thereof, a rotary shaft 45 coupled thereto. The rotary shaft 45, in turn, is rotatably coupled to the other end of the respective one of the intermediate link members 17.

The rotary shaft 43 at the distal end-side link hub 13 and the rotary shaft 45 at the respective one of the intermediate link members 17 have identical shapes to that of the rotary shaft 35 (Fig. 5A) and are rotatably coupled through two bearings (not shown) to a respective one of the rotary shaft coupling members 41 and the other end of the respective one of the intermediate link members 17, respectively.

<Attitude Control Actuator>

The attitude control actuator 10 is a rotary actuator that includes a servo motor equipped with the speed reducer mechanism 52 and is installed to a surface of the proximal end member 6 of the proximal end-side link hub 12 so as to be coaxial with the rotary shaft 22 shown in Fig. 5A. The attitude control actuator 10 shown in Fig. 5B and the speed reducer mechanism 52 shown in Fig. 5A are provided as a single unit, and the speed reducer mechanism 52 is fixed to the proximal end member 6 shown in Fig. 5B by means of a motor securing member 53. Note that the attitude control actuator 10 used may be equipped with a brake.

While each of the three linkages 14 is provided with the attitude control actuator 10 in the instant example, the attitude of the distal end-side link hub 13 (Fig. 3) can be reliably set relative to the proximal end-side link hub 12 as long as at least two of the three linkages 14 are provided with the attitude control actuator 10.

The three attitude control actuators 10 are positioned such that the rotary shafts 22 (Fig. 5A) therefor are oriented perpendicular to the central axis QA (Fig. 4) of the proximal end-side link hub 12, and a centric point P10 at which the rotary shafts 22 (Fig. 5A) of the attitude control actuators 10 converge lies on the central axis QA (Fig. 4) of the proximal end-side link hub 12. Further, for two of the three attitude control actuators 10, a bisector line for the rotary shaft 22 (Fig. 5A) lies on a plane defined by the rotary shaft 22 (Fig. 5A) of a respective one of the rotary actuators 10 and the central axis QA (Fig. 4) of the proximal end-side link hub 12. The bisector line is a line extending perpendicular to the axis of the "rotary shaft 22" shown in Fig. 5A and passing through a longitudinal midpoint of the "rotary shaft 22" that is located between the trailing end of the larger diameter part 22a and the leading end of the male-threaded part 22c. Furthermore, the bisector line is located on the side of the acute angle formed between the rotary shaft 22 of the respective one of the rotary actuators 10 (Fig. 5B) and the central axis QA (Fig. 4) of the proximal end-side link hub 12 (Fig. 5B).

As illustrated in Fig. 5A, the speed reducer mechanism 52 has a flange output such that the output shaft 52a has a large diameter. The free end face of the output shaft 52a presents a planar flanged face 54 extending perpendicular to the centerline of the output shaft 52a. The output shaft 52a is connected across the spacer 28 to the rotary shaft supporting part 26 of a respective one of the proximal end-side end link members 15 by means of the bolts 29. The output shaft 52a of the speed reducer mechanism 52 is provided therein with an inner diameter groove 57 that is fitted with the larger diameter part 22a of the rotary shaft 22 which defines a respective one of the revolute pairs between the proximal end-side link hub 12 (Fig. 4) and the proximal end-side end link members 15.

As illustrated in Fig. 4, each attitude control actuator 10 is driven into rotation to actuate the parallel linkage mechanism 9 of the link actuation device 7. More specifically, when an attitude control actuator 10 is driven into rotation, its rotation is transmitted to the rotary shaft 22 at a reduced speed through the speed reducer mechanism 52 shown in Fig. 5A. This causes a change in the angle of a proximal end-side end link member 15 to the proximal end-side link hub 12 shown in Fig. 4. Such changes cooperate to set the distal end-side link hub 13 into a desired attitude relative to the proximal end-side link hub 12.

<End Effector>

An end effector (not shown) is attached to the distal end member 40 of the distal end-side link hub 13. The end effector attached to the distal end member 40 is configured to be movable with the aid of the attitude control actuators 10. Examples of the end effector include a gripper or other types of hands, a washing nozzle, a dispenser, a welding torch, and an imaging and processing device.

<Control Device and Operating Device>

Referring to Fig. 1, the control device Cu controls each attitude control actuator 10 so as to set the distal end-side link hub 13 into a target attitude relative to the proximal end-side link hub 12 from a current attitude. The target attitude is externally provided to the control device Cu from an external command unit Ed. The control device Cu is numerically controlled by a computer and is largely constituted by an attitude change controller 58. The attitude change controller 58 is implemented with a servo driver, a programmable logic controller (or PLC in short), or other such means. Each attitude control actuator 10 is electrically connected with a respective one of per-unit control modules 59 within the control device Cu.

For setting the distal end-side link hub 13 from a current attitude into a final target attitude which is a target attitude provided from the external command unit Ed, the attitude change controller 58 generally determines, through a prescribed set of computations, and registers a plurality of points (with different amounts of displacement between the points) which the distal end-side link hub 13 is meant to pass on the way, to successively generate commands that will make the distal end-side link hub 13 move through all of the registered points sequentially from one to another. Such a point computation module (not shown) that determines, through computations, and registers the plurality of points is provided internally or externally to the attitude change controller 58 on an upper level than a command transform module 60 which will be further discussed later. Alternatively, all of the points may be provided by the external command unit Ed.

The control device Cu communicates with the external command unit Ed such as an upper-level PLC or an input switch, or an operating device Ou such as a programmable display, to carry out attitude control of the link actuation device 7 upon receiving commands from such external command unit Ed or operating device Ou. The function of the operating device Ou is to enable the displacement pattern of the distal end member 40 and control parameters, among others, to be set. The operating device Ou includes an operating element 61, such as buttons, via which to select and change load conditions. Examples of the items of the load conditions include a load that is borne, which can include that of the end effector as well as a workpiece set on the end effector or the like.

Referring to Fig. 2, the operating device Ou can be used to issue commands to the control device Cu shown in Fig. 1, display the control parameters from the control device Cu on a display 62 (Fig. 2) thereon, and write and modify the control parameters in the control device Cu, via the operating element 61, examples of which include buttons 63 on, for instance, a touch screen of the display 62, or physical buttons 64. It should be recognized that the external command unit Ed may be provided as part of the operating device Cu. The control parameters may be simply referred to herein as parameters or parameter values.

Still referring to Fig. 2, the operating device Ou includes buttons 63a with which to switch between load conditions 1 to n (whereby n is a natural number of 2 or more), a parameter display and number input section 63b where numbers can be input to more than one control parameter that is displayed and indicates control parameters A to m related to the jerk and acceleration of the distal end member 40 (Fig. 3) as will be further discussed later, and a parameter load button 63c for loading the more than one control parameter to the control device Cu (Fig. 1).

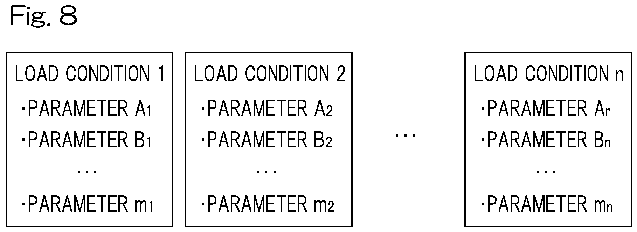

As can be seen from Fig. 8, the more than one control parameter A to m varies with the load conditions 1 to n. By switching between the load conditions, the values of the control parameters A to m displayed on the display 62 of the operating device Ou shown in Fig. 2 also change. In so doing, a parameter switching command is also issued to an initial parameter generation rule module 65 (which will be further discussed later) of the control device Cu shown in Fig. 1.

The attitude change controller 58 drives each attitude control actuator 10 for a requested arm rotation angle, from the rotational angle of a respective one of the proximal end-side end link members 15 at the current attitude to the rotational angle of the respective one of the proximal end-side end link members 15 at a target attitude. Particularly, the attitude change controller 58 includes the initial parameter generation rule module 65, the command transform module 60, a synchronous control module 66, and the per-unit control modules 59.

The initial parameter generation rule module 65 includes a parameter store 65a and a parameter switcher 65b. The parameter store 65a is where a plurality of parameter values related to the jerk and acceleration are stored for each of the load conditions in such a manner that changes can be made to the parameter values via the operating device Ou or the external command unit Ed. The parameters in the parameter store 65a may include non-overridable parameters that are not displayed on the operating device Ou or the external command unit Ed and cannot be modified via the operating device Ou or the external command unit Ed.

<Parameter Switcher>

The parameter switcher 65b switches control parameters to adjust the jerk and acceleration of the attitude control actuators 10 or the distal end member 40 as a function of a load applied to the distal end member 40. In particular, the parameter switcher 65b retrieves from the parameter store 65a those parameters that correspond to one of the load conditions 1 to n which is specified via the operating device Ou or the external command unit Ed, and communicates them to the command transform module 60 as a rule to be used by an initial parameter generator 60a.

Further, the parameter switcher 65b switches more than one control parameter including at least one of the filter time constant of a moving average filter or a model following control gain. The initial parameter generator 60a generates control parameters according to the rule that is set.

Examples of the control parameters A to m related to the jerk and acceleration include, in a non-limiting manner, an acceleration time, a deceleration time, a maximum speed for commanded velocitys, a filter time constant, a moment of inertia ratio, a position loop gain, a speed loop gain, and a speed loop integral time constant.

<Waveforms for Speed and Others When No Filter Time Constant Is Set>

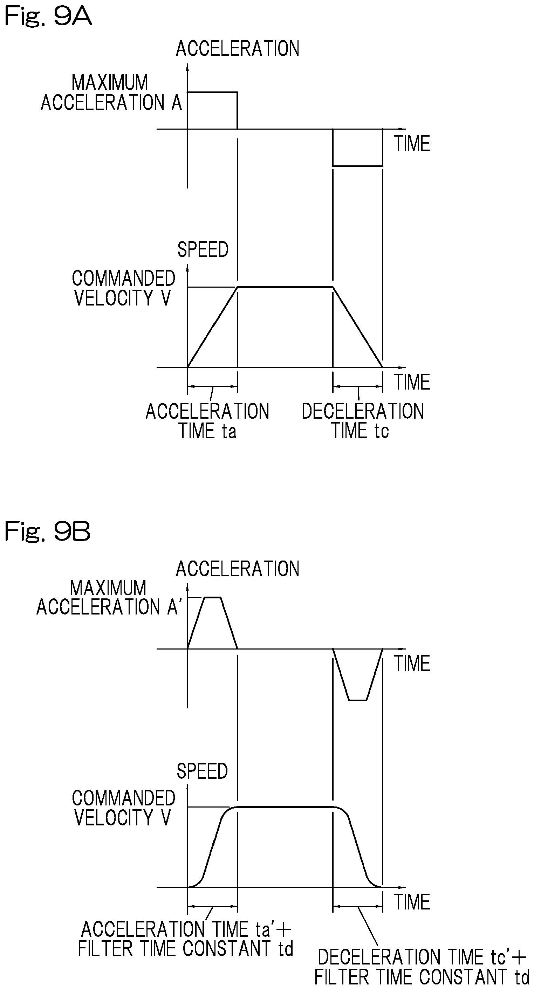

Fig. 9A illustrates reference waveforms for speed and acceleration when no filter time constant is set. If a filter time constant is not set as one of the control parameters, there will be an abrupt change in acceleration (i.e., an enormous jerk) during both acceleration to a commanded velocity V and deceleration that occurs upon completion of the attitude control. It therefore leads to significant vibrations during a driving phase and during a settling phase, when the weight that is borne as a load is high. The term "settling phase" refers to both the acceleration regime that starts from the resting condition and ends with the uniform speed condition of the parallel linkage mechanism, and the deceleration regime that, conversely, starts from the uniform speed condition and ends with the resting condition of the parallel linkage mechanism, during the period in which the parallel linkage mechanism is in acceleration or deceleration for positioning or other purposes.

<Waveforms for Speed and Others When A Filter Time Constant Is Set>

Fig. 9B illustrates waveforms for speed and acceleration when a filter time constant is set in accordance with the instant embodiment. A filter time constant td is provided as one of the control parameters related to the jerk and acceleration to suppress the jerk during acceleration and deceleration. Yet, the filter time constant td, if used alone, may extend the time necessary to accelerate to the commanded velocity V or decelerate to zero speed and, therefore, may work counter to high-speed operation.

This can be overcome by shortening the acceleration time ta' and deceleration time tc' in Fig. 9B from the acceleration time ta and deceleration time tc in Fig. 9A, increasing the maximum acceleration A' in Fig. 9B from the maximum acceleration A in Fig. 9A, increasing the commanded velocity V (though this is not illustrated), or implementing more than one of these in combination. In this way, high-speed operation can be realized while suppressing vibrations that may appear during a driving phase and during a settling phase.

<Control Method When No Filter Time Constant Is Set>

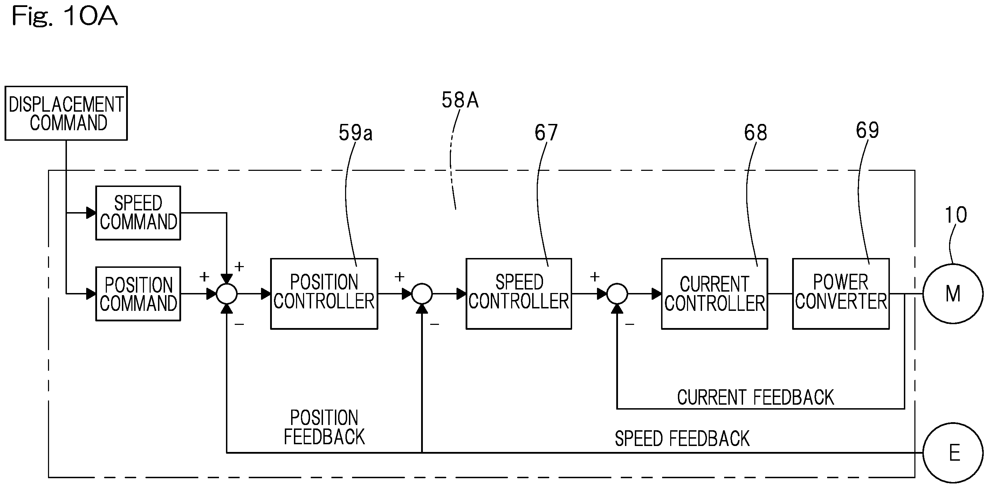

Referring to a reference example of Fig. 10A, in response to a displacement command for a target position, the attitude change controller 58A of the link actuation device generally identifies the location and attitude of the distal end-side link hub 13 (Fig. 3) at the current position and also computes the location and attitude of the same at a requested target position. After such computations, the attitude change controller 58A goes on to compute, from the distance to the target position, a commanded velocity, an acceleration time, and a deceleration time, the amount of actual displacement and displacement speed to be carried out by the attitude control actuators 10 (Fig. 3) in the form of servo motors M connected with the control device, and outputs them as a speed command and a position command for the servo motors M.

The attitude change controller 58A combines such output command information with feedback information on the current position obtained from encoders E for the servo motors M and feedback information on the current displacement speed, to make adjustments to a proportional gain, an integral gain, and a derivative gain at each of a position controller 59a, a speed controller 67, and a current controller 68. A power converter 69 provided downstream of the current controller 68 produces prescribed AC power through power conversion.

<Control Method When A Filter Time Constant Is Set>

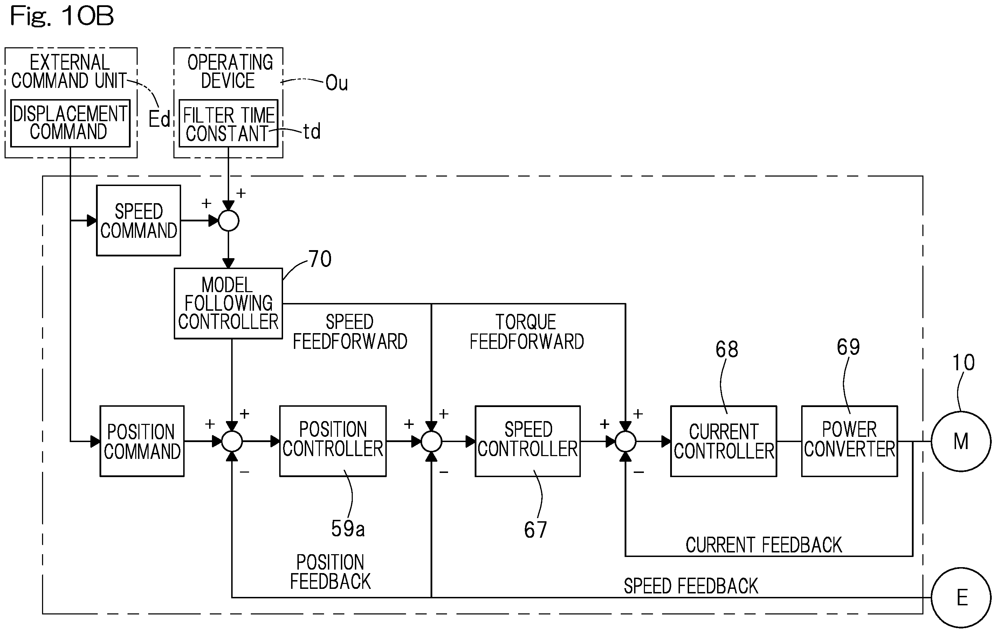

Referring to Fig. 10B showing the instant embodiment where a filter time constant td is added as one of the items of a speed command, convergence cannot be reached with conventional speed command and position command alone, as adjustments are being made to a proportional gain, an integral gain, and a derivative gain at the position controller 59a or the speed controller 67. Hence, an additional item needs to be provided in order to convey the influence of the filter time constant td to each of such controllers. A controller which makes adjustments to and issues commands pertaining to this additional control item is called a model following controller 70. By way of example, the model following controller 70 can add a model following control gain to the position controller 59a, a speed feedforward to the speed controller 67, and a torque feedforward to the current controller 68. In this way, the responsiveness of the servo motors E can be improved.

<Command Transform Module and Others>

Referring back to Fig. 1, the basic function of the command transform module 60 is to transform a target attitude command B ($\theta$b, $\varphi$b), which is given in the form of a bending angle $\theta$ and a swivel angle $\varphi$ from the externa command unit Ed either directly or via the point computation module, into a rotational angle $\beta$ of a proximal end-side end link member 15 of each of the linkages 14. The requested arm rotation angle corresponds to the difference between a transformed rotational angle $\beta$n ($\beta$1 to $\beta$3) and the current rotational angle $\alpha$ of each proximal end-side end link member 15. The rotational angle $\beta$ of a proximal end-side end link member 15 of each of the linkages 14 can be calculated from the bending angle $\theta$ and the swivel angle $\varphi$ through inverse transformation according to prescribed relation formula (1):
[Math 1]

$$cos(\theta/2)sin\beta n - \sin(\theta/2)\sin(\varphi + \delta n)\cos\beta n + \sin(\gamma/2) = 0$$

$$\text{Formula (1)}$$

In formula (1), $\gamma$ represents an angle formed between an intermediate link member 17 pivotably coupled to a distal end-side end link member 15 and a coupling end axis of that intermediate link member 17 at a pivotal connection to the proximal end-side end link member 15, and $\delta$n ($\delta$1, $\delta$2, $\delta$3) represents a circumferential interval angle between a reference one of the proximal end-side end link members 15 and a different one of the proximal end-side end link members 15. When the number of the linkages 14 is three and all of the linkages 14 are circumferentially uniformly distributed, the circumferential interval angles $\delta$1, $\delta$2, $\delta$3 for all of the proximal end-side end link members 15 are 0, 120, and 240 degrees, respectively.

Given the attitude A ($\theta$a, $\varphi$a) and the attitude B ($\theta$b, $\varphi$b) of the distal end-side link hub 13, formula (1) can be used to relationally establish the corresponding arm rotation angles for the attitudes A and B to be an arm rotation angle ($\beta$1a, $\beta$2a, $\beta$3a) for the attitude A and an arm rotation angle ($\beta$1b, $\beta$2b, $\beta$3b) for the attitude B.

The command transform module 60 includes the initial parameter generator 60a and a determiner and changer 60b, in addition to those responsible for the aforementioned basic function. The requested arm rotation angle obtained through transformation by the command transform module 60 is provided to the synchronous control module 66 from which it is, in turn, provided to the per-unit control modules 59 associated with the respective attitude control actuators 10. That is, initial parameters are generated and processed through prescribed determinations and changes within the command transform module 60, to calculate the speeds between different points and the coordinates for all of the attitude control actuators (or motor positions).

The synchronous control module 66 carries out synchronous control of rotations of all of the proximal end-side end link members 15 and communicates, at synchronization timings, commands indicating instantaneous positions to the per-unit control modules 59 which serve as actuator drivers. The per-unit control modules 59 drive the associated attitude control actuators 10 in response to the commands from the synchronous control module 66. The synchronous control module 66 includes a parameter setter 66a and a position setter 66b that respectively set parameters and positions to be specified in each of the per-unit control modules 59. The control parameters initially generated by the command transform module 60 or modified with changes made thereto are set in the parameter setter 66a. The requested arm rotation angle is set in the position setter 66b.

Each of the per-unit control modules 59 controls the driving of an associated attitude control actuator 10 to rotate a respective one of the proximal end-side end link members 15 from the current angle to a target angle and includes the position controller 59a and a command executer 59b which are implemented with a servo driver. In accordance with the control parameters and the requested arm rotation angle, the synchronous control module 66 provides driving commands to the position controller 59a through pulse payout or other schemes, and the command executer 59b drives a respective one of the attitude control actuators 10 accordingly. The position controller 59a carries out feedback control by using the provided driving commands and sensing values from a respective one of the encoders E (Fig. 10B) in the form of rotational angle sensors.

The initial parameter generator 60a of the command transform module 60 generates initial values for control parameters according to the rule that is set, with which to control all of the proximal end-side end link members 15 such that each simultaneously starts and simultaneously finishes rotation through the requested arm rotation angle which is given for a respective one of the proximal end-side end link members 15 from an upper-level unit.

The initial parameter generator 60a sets an acceleration time and a deceleration time among the control parameters to be one period of the resonance frequency of the link actuation device 7. The resonance frequency used herein refers to a resonance frequency of the device 7 when all the objects that should be set on the distal end-side link hub 13 are set, including the end effector.

The determiner and changer 60b assesses the control parameters generated by the initial parameter generator 60a according to a defined set of criteria and makes changes thereto when it determines that they should be modified. The determiner and changer 60b includes a driving time estimator 60ba, a conditional selector 60bb, and a parameter modifier 60bc. The driving time estimator 60ba estimates a driving time from an acceleration time, a deceleration time, a commanded velocity, and requested arm rotation angles for the attitude control actuators 10. The conditional selector 60bb compares the estimated driving time thus estimated against the sum of the acceleration time and the deceleration time. The parameter modifier 60bc modifies the initial values of the control parameters as a function of the result of comparison by the conditional selector 60bb.

<Benefits and Advantages>

According to the control device Cu for the link actuation device 7 as described above, the jerk can be decreased, for example, in response to an increase of a load such as the weight that is borne, to suppress the vibrations of the distal end member 40 that may appear during a driving phase and during a settling phase. In particular, adjustments to the jerk are carried out with little or no reduction of a commanded velocity. Accordingly, a wide range of weights can be borne by a single machine which concurrently implements a high-speed operation. In this way, it is possible to enhance the versatility of the link actuation device 7 that is part of the industrial equipment.

The link actuation device 7 obviates the need to install a servo motor to a movable component of the device 7 by adopting a parallel linkage mechanism 9 and, thanks to the resulting low weight of the movable component, is good at performing intricate movements at higher speeds by adding more jerks. A jerk is a significant factor for the speed of such a link actuation device 7 and, accordingly, a takt time. Increase of the weight borne leads to more occurrences of vibrations due to a greater weight on the movable component. The parameter switcher 65b configured to switch control parameters to adjust a jerk is even more advantageous for these reasons.

The parameter switcher 65b is configured to switch more than one control parameter including at least one of the filter time constant of a moving average filter or a model following control gain. Here, by either raising the filter time constant of the moving average filter or lowering the model following control gain, the jerk can be decreased to suppress impacts which may result from changes in acceleration. Thus, the parameter switcher 65b causes a change in the control parameters so that either the filter time constant of the moving average filter is raised or the model following control gain is lowered when the weight (or load) borne is high. In this way, vibrations during a settling phase and torque of the actuators 10 can be reduced and, therefore, the vibrations of the distal end member 40 that may appear during a driving phase and during a settling phase can be suppressed without compromising the speed of the parallel linkage mechanism 9.

Note that conventional control does not take into account continuous changes in acceleration which may be introduced by the moving average filter. That is, the continuous changes in acceleration could be seen as influences triggered by disturbances and automatically corrected in an automatic control loop, thereby producing unintended results. In this situation, by modifying the filter time constant of the moving average filter together with the model following control gain, it is possible to bring position control, speed control, and current control closer to ideal, linear-like control which approximates conventionally issued commands, as a function of the magnitude of the load. In this way, the occurrences of vibrations and impacts can be suppressed while achieving a shorter settling time with speeds kept at the maximum level.

The parameter switcher 65b is configured to switch more than one control parameter to adjust the acceleration of the attitude control actuators 10 or the distal end member 40. Here, by adjusting not only the jerk but also the acceleration as a function of the weight borne, a wider adjustment range for the control parameters can be made available, which thereby facilitates suppression of vibrations that may appear during a driving phase and during a settling phase as well as reduction of torque of the attitude control actuators 10, without compromising the speed of the link actuation device 7.

The more than one control parameter to adjust the acceleration includes at least one of an acceleration time, a deceleration time, or a commanded velocity. The inclusion of at least one of an acceleration time, a deceleration time, or a commanded velocity in control parameters related to an acceleration can make it easy for adjustments to be made to the acceleration.

The parameter switcher 65b may be configured to decrease the jerk and increase the acceleration as the load increases. A jerk has more effect than an acceleration on the generation of impacts on the distal end member 40 of the link actuation device 7. Hence, this type of adjustments to the control parameters may enable the link actuation device 7 to be operated at even higher speeds.

The link actuation device 7 includes an operating device Ou configured to enable the displacement pattern of the distal end member 40 and the control parameters to be set. The operating device Ou shown in Fig. 2 includes an operating element 61 via which to select and change load conditions. In this case, the operating element 61 of the operating device Ou can be used to set the displacement pattern and control parameters, among others, for the control device Cu shown in Fig. 1, and can also be used to conveniently switch the control parameters between values corresponding to different load conditions, as a function of a selected load condition.

<Further Embodiments>

Next, further embodiments will be described. In the following discussions, features corresponding to those described with respect to preceding embodiments are numbered similarly and will not be described to avoid redundancy. Where only a subset of features are described, the rest of the features should be regarded as analogous to those of the preceding embodiments unless otherwise noted. Similar features produce similar effects and benefits. In addition to particular combinations of features described with respect to individual embodiments, the embodiments themselves can be partially combined with each other, unless such combinations prove to be inoperable.

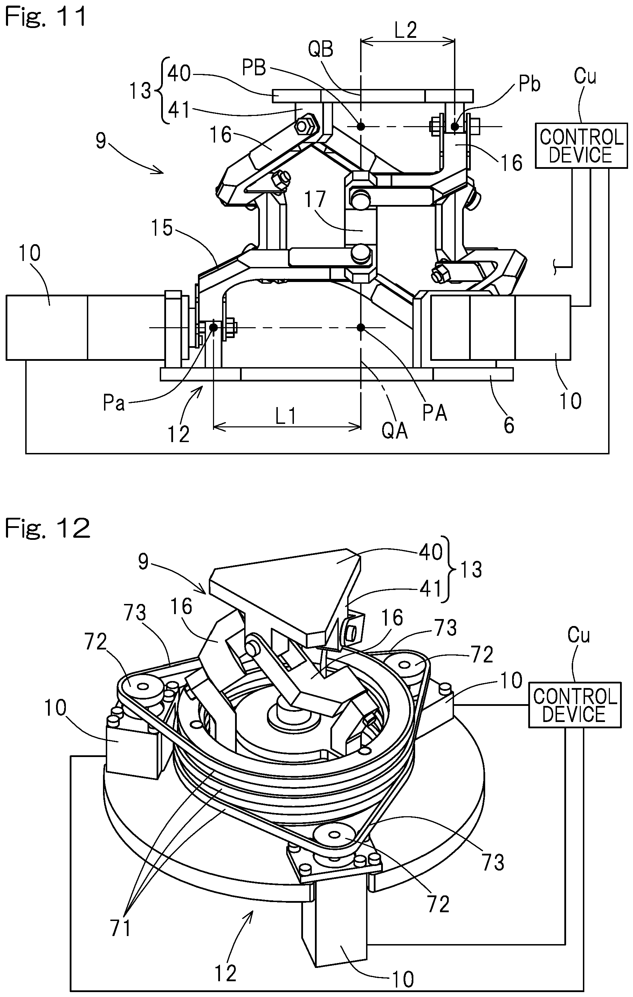

[Second Embodiment: Fig. 11]

Referring to Fig. 11, the parallel linkage mechanism 9 may be configured to have a proximal end-side arm length L1 that is longer than a distal end-side arm length L2. The proximal end-side arm length L1 refers to the distance between the center PA of the proximal end-side spherical link and the axial center Pa of a shaft for the revolute pair between one of the proximal end-side end link members 15 and the proximal end-side link hub 12. The distal end-side arm length L2 refers to the distance between the center PB of the distal end-side spherical link and the axial center Pb of a shaft for the revolute pair between one of the distal end-side end link members 16 and the distal end-side link hub 13. The provision of a control device Cu analogous to the aforementioned control device Cu can help a wide range of weights be borne by a link actuation device comprising such a parallel linkage mechanism 9 and can, therefore, provide an enhanced versatility to the same.

[Third Embodiment: Fig. 12]

Referring to Fig. 12, the control device Cu may control the attitude of the distal end-side link hub 13 relative to the proximal end-side link hub 12 by rotating three rotary bodies 71 through the attitude control actuators 10. The three rotary bodies 71 are supported on the proximal end-side link hub 12 such that they are coaxially and each rotatably supported thereon. Pulleys 72 are supported on the rotary shafts of the respective attitude control actuators 10, and belts 73 are each passed between and around a respective one of the three pulleys 72 and a respective one of the rotary bodies 71. Thus, the attitude of the distal end-side link hub 13 can be controlled by rotating the rotary shafts of the attitude control actuators 10 and, therefore, rotating the pulleys 72 to cause rotation of the rotary bodies 71 through the belts 73. The provision of a control device Cu analogous to the aforementioned control device Cu can help a wide range of weights be borne by a link actuation device comprising such a parallel linkage mechanism 9 and can, therefore, provide an enhanced versatility to the same.

[Fourth Embodiment: Machine Tool]

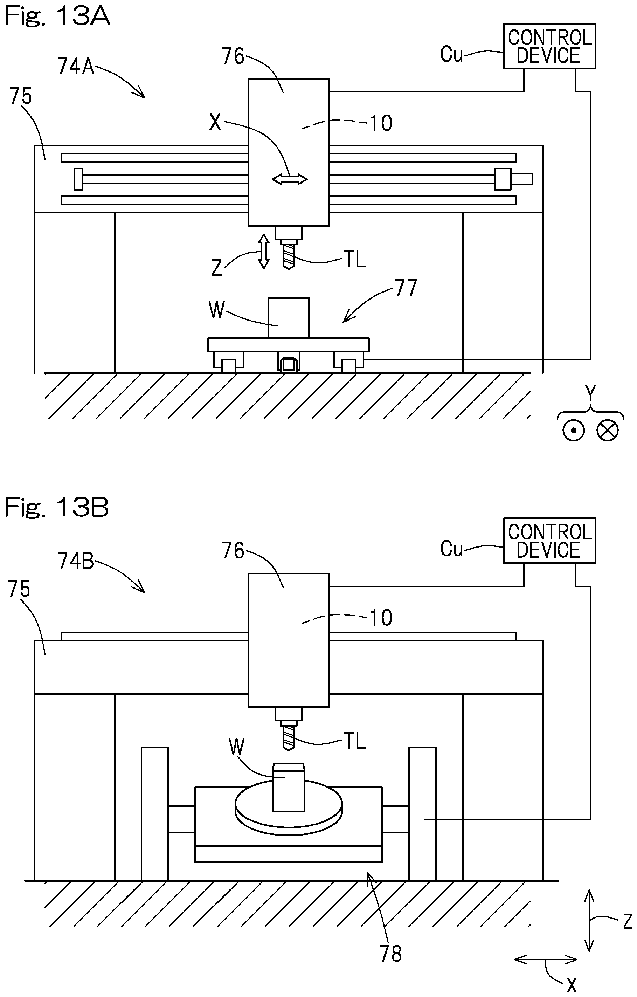

For instance, a machine tool 74A shown in Fig. 13A may be employed as the industrial equipment. The machine tool 74A includes a linearly movable unit 76 which goes back and forth along two orthogonal axes (i.e., the X- and Z-axes) on a gate-like frame 75 and a carriage mechanism 77 that can be displaced along the Y-axis which is orthogonal to each of the X- and Z-axes below the linearly movable unit 76. A tool TL which is capable of machining a workpiece W is attached to the displacement drive actuators 10 which serve as a power output of the linearly movable unit 76, and the workpiece W is attached on a mounting base of the carriage mechanism 77. The actuators 10 and the carriage mechanism 77 are synchronously controlled by the control device Cu. The use of a control device analogous to the aforementioned control device Cu to control, in particular, the actuators 10 can help realize a machine tool that can bear a wide range of weights and that can therefore have an enhanced versatility.

[Fifth Embodiment: Machine Tool]

A machine tool 74B shown in Fig. 13B may be employed as the industrial equipment. Instead of the abovementioned carriage mechanism, the machine tool 74B includes a rotary drive mechanism 87 disposed to rotatably support a workpiece W about, for example, the X-axis. Again, the use of a control device analogous to the aforementioned control device Cu to control, in particular, the actuators 10 can help realize a machine tool that can bear a wide range of weights and that can therefore have an enhanced versatility.

While the link actuation device is shown to have a parallel linkage-type configuration, the operating mechanism may alternatively adopt a pan and tilt configuration (not shown) or any other configurations that can control the bending angle θ and the swivel angle φ.

Although not shown, the industrial equipment may comprise a vertical articulated robot or a horizontal articulated robot.

While preferred embodiments have been described thus far with reference to the drawings, various additions, modifications, or omissions can be made therein without departing from the principle of the present invention and are, thus, encompassed within the scope of the present invention.

(Reference Symbols)

| | |
|---|---|
| 7 | link actuation device (industrial equipment) |
| 10 | attitude control actuator |
| 12 | ···· proximal end-side link hub |
| 13 | distal end-side link hub |
| 14 | linkage |
| 15 | ···· proximal end-side end link member |
| 16 | distal end-side end link member |
| 17 | intermediate link member |
| 40 | distal end member |
| 61 | operating element |
| 65b | parameter switcher |
| 74A, 74B | machine tool (industrial equipment) |
| Cu | control device |
| Ou | operating device |

**Claims**

1. A control device for industrial equipment with a distal end member provided movably by means of an actuator, the control device being operable to control the actuator and comprising:
a parameter switcher configured to switch control parameters to adjust a jerk of the actuator or the distal end member as a function of a load applied to the distal end member.

2. The control device for industrial equipment as claimed in claim 1, wherein the industrial equipment comprises a link actuation device, the link actuation device comprises a proximal end-side link hub, a distal end-side link hub, and at least three linkages via which the distal end-side link hub is coupled to the proximal end-side link hub in such a manner that allows an attitude of the distal end-side link hub to change relative to the proximal end-side link hub, each of the linkages includes a proximal end-side end link member and a distal end-side end link member each having one of opposite ends that is pivotally coupled to a respective one of the proximal end-side link hub and the distal end-side link hub and an intermediate link member having opposite ends each pivotally coupled to a respective one of: the other of the opposite ends of the proximal end-side end link member; and the other of the opposite ends of the distal end-side end link member, and two or more of the at least three linkages are provided with the actuator for attitude control to set the distal end-side link hub into a desired attitude relative to the proximal end-side link hub.

3. The control device for industrial equipment as claimed in claim 1 or 2, wherein the parameter switcher is configured to switch more than one control parameter including at least one of a filter time constant of a moving average filter or a model following control gain.

4.  The control device for industrial equipment as claimed in any one of claims 1 to 3, wherein the parameter switcher is configured to switch more than one control parameter to adjust an acceleration of the actuator or the distal end member.

5.  The control device for industrial equipment as claimed in claim 4, wherein the more than one control parameter to adjust said acceleration includes at least one of an acceleration time, a deceleration time, or a commanded velocity.

6.  The control device for industrial equipment as claimed in claim 4 or 5, wherein the parameter switcher is configured to decrease said jerk and increase said acceleration as the load increases.

7.  The control device for industrial equipment as claimed in any one of claims 1 to 6, wherein the industrial equipment comprises an operating device configured to enable at least a displacement pattern of the distal end member and the control parameters to be set, and the operating device includes an operating element via which to select and change load conditions.

Fig. 1

## Fig. 2

OPERATING DEVICE — Ou

DISPLACEMENT PATTERN Nos. 🔢🔢 (SWITCH Nos.)

PARAMETER A 🔢🔢🔢🔢🔢  PARAMETER E 🔢🔢🔢🔢🔢
PARAMETER B 🔢🔢🔢🔢🔢
PARAMETER C 🔢🔢🔢🔢🔢  PARAMETER m 🔢🔢🔢🔢🔢
PARAMETER D 🔢🔢🔢🔢🔢  (LOAD PARAMETER)

(LOAD CONDITION 1) (LOAD CONDITION 2) .... (LOAD CONDITION n)

61, 62, 63, 63a, 63b, 63c, 64

## Fig. 3

Fig. 4

Fig. 5A

Fig. 5B

Fig. 6

Fig. 7

Fig. 8

| LOAD CONDITION 1 | LOAD CONDITION 2 | | LOAD CONDITION n |
|---|---|---|---|
| ·PARAMETER $A_1$ | ·PARAMETER $A_2$ | | ·PARAMETER $A_n$ |
| ·PARAMETER $B_1$ | ·PARAMETER $B_2$ | $\cdots$ | ·PARAMETER $B_n$ |
| $\cdots$ | $\cdots$ | | $\cdots$ |
| ·PARAMETER $m_1$ | ·PARAMETER $m_2$ | | ·PARAMETER $m_n$ |

Fig. 9A

ACCELERATION

MAXIMUM
ACCELERATION A

TIME

SPEED

COMMANDED
VELOCITY V

TIME

ACCELERATION
TIME ta

DECELERATION
TIME tc

Fig. 9B

ACCELERATION

MAXIMUM
ACCELERATION A'

TIME

SPEED

COMMANDED
VELOCITY V

TIME

ACCELERATION TIME ta'+
FILTER TIME CONSTANT td

DECELERATION TIME tc'+
FILTER TIME CONSTANT td

23

Fig. 10A

Fig. 10B

EP 4 501 551 A1

Fig. 11

Fig. 12

Fig. 13A

Fig. 13B

<div align="center">

## INTERNATIONAL SEARCH REPORT

</div>

| | International application No. |
|---|---|
| | **PCT/JP2023/011499** |

| **A.** | **CLASSIFICATION OF SUBJECT MATTER** |
|---|---|
| | ***B25J 9/10***(2006.01)i; ***B23Q 15/12***(2006.01)i; ***B25J 11/00***(2006.01)i; ***B25J 13/00***(2006.01)i; ***G05B 19/416***(2006.01)i |
| | FI:   B25J9/10 A; B25J11/00 D; B25J13/00 Z; B23Q15/12 Z; G05B19/416 F |

According to International Patent Classification (IPC) or to both national classification and IPC

| **B.** | **FIELDS SEARCHED** |
|---|---|

Minimum documentation searched (classification system followed by classification symbols)

B25J9/10; B23Q15/12; B25J11/00; B25J13/00; G05B19/416

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2021-163077 A (BROTHER IND., LIMITED) 11 October 2021 (2021-10-11) paragraphs [0019]-[0096], fig. 1-11 | 1, 3-7 |
| Y | paragraphs [0019]-[0096], fig. 1-11 | 2-7 |
| Y | JP 2015-055895 A (NTN CORPORATION) 23 March 2015 (2015-03-23) particularly, see abstract, paragraphs [0026]-[0038], [0061], fig. 1-2, etc. | 2-7 |
| Y | WO 2018/029910 A1 (MITSUBISHI ELECTRIC CORPORATION) 15 February 2018 (2018-02-15) see, for example, abstract, claim 1, etc. | 2-7 |
| Y | JP 2019-109598 A (OMRON CORPORATION) 04 July 2019 (2019-07-04) paragraphs [0025], [0047]-[0054], fig. 6 | 3-7 |
| A | JP 2015-188945 A (NTN CORPORATION) 02 November 2015 (2015-11-02) entire text, all drawings | 1-7 |
| A | JP 2013-198942 A (NTN CORPORATION) 03 October 2013 (2013-10-03) entire text, all drawings | 1-7 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/011499**

**C. DOCUMENTS CONSIDERED TO BE RELEVANT**

| Category* | Citation of document, with indication, where appropriate, of the relevant passages | Relevant to claim No. |
|---|---|---|
| A | JP 2021-024061 A (NTN CORPORATION) 22 February 2021 (2021-02-22) fig. 1-15 | 1-7 |
| A | JP 2018-157046 A (FASFORD TECHNOLOGY COMPANY, LIMITED) 04 October 2018 (2018-10-04) entire text, all drawings | 1-7 |
| A | JP 2019-082771 A (BROTHER IND., LIMITED) 30 May 2019 (2019-05-30) entire text, all drawings | 1-7 |
| A | JP 2018-163585 A (FANUC LIMITED) 18 October 2018 (2018-10-18) entire text, all drawings | 1-7 |
| A | KR 10-2013-0116766 A (HYUNDAI WIA CORPORATION) 24 October 2013 (2013-10-24) entire text, all drawings | 1-7 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2021-163077 | A | 11 October 2021 | CN | 113467379 | A | |
| JP | 2015-055895 | A | 23 March 2015 | (Family: none) | | | |
| WO | 2018/029910 | A1 | 15 February 2018 | US<br>abstract, claim 1<br>CN | 2019/0384233<br><br>109562518 | A1<br><br>A | |
| JP | 2019-109598 | A | 04 July 2019 | US<br>paragraphs [0034], [0062]-[0069], fig. 6<br>WO<br>EP<br>CN | 2020/0264571<br><br><br>2019/117201<br>3726304<br>111033395 | A1<br><br><br>A1<br>A1<br>A | |
| JP | 2015-188945 | A | 02 November 2015 | (Family: none) | | | |
| JP | 2013-198942 | A | 03 October 2013 | US<br>entire text, all drawings<br>WO<br>EP<br>CN | 2015/0088308<br><br>2013/141138<br>2829367<br>104203502 | A1<br><br>A1<br>A1<br>A | |
| JP | 2021-024061 | A | 22 February 2021 | US<br>fig. 1-15<br>WO<br>EP<br>CN | 2022/0166288<br><br>2020/196164<br>3943780<br>113597523 | A1<br><br>A1<br>A1<br>A | |
| JP | 2018-157046 | A | 04 October 2018 | CN<br><br>KR  10-2018-0106834 | 108628257<br><br> | A<br><br>A | |
| JP | 2019-082771 | A | 30 May 2019 | (Family: none) | | | |
| JP | 2018-163585 | A | 18 October 2018 | US<br>entire text, all drawings<br>DE<br>CN | 2018/0275639<br><br>102018002303<br>108663987 | A1<br><br>A1<br>A | |
| KR | 10-2013-0116766 | A | 24 October 2013 | (Family: none) | | | |

Form PCT/ISA/210 (patent family annex) (January 2015)

**EP 4 501 551 A1**

**Patent documents cited in the description**

- JP 2022053430 A
- JP 2000094245 A
- US 5893296 A